# EUROPEAN PATENT APPLICATION

(11) **EP 4 686 084 A1**
(43) Date of publication of application: **28.01.2026**
(21) Application number: 24209521.4
(22) Date of filing: 29.10.2024
(51) Int. Cl.: H02P 27/06, H02M 5/42, H02M 5/458

(54) **ENERGY STORAGE BASED DC VOLTS BOOST FOR TRANSIENT HIGH-SPEED/HIGH-TORQUE OPERATION OF VARIABLE FREQUENCY DRIVE CONTROLLED MOTORS**

(30) Priority: 23.07.2024 US 202418781493
(71) Applicant: Williams, Kevin, R., Waller, TX 77484 (US); Pace, Gary, Wrentham, MA 02093 (US)
(72) Inventor: Williams, Kevin, R., Waller, TX 77484 (US); Pace, Gary, Wrentham, MA 02093 (US)
(74) Representative: Mewburn Ellis LLP

(57) **Abstract**

A process for transiently increasing performance of an electric motor includes boosting a DC link voltage of a rectifier-fed variable frequency drive of the electric motor by using an energy storage system. The energy storage system delivers power directly to a DC link of the variable frequency drive. The energy storage system can be at least one of a battery bank, capacitor bank and a flywheel. Feedback from the DC link is delivered to a DC link controller.

## Description

### BACKGROUND OF THE INVENTION

The present invention relates to variable frequency drive-controlled motors. More particularly, the present invention relates to energy storage systems as used in conjunction with such electric motors. Additionally, the present invention relates to systems for supplying power and storing power.

A variable frequency drive or variable-speed drive is a type of AC motor drive that controls speed and torque by varying the frequency of the input electricity. Depending on its topology, it controls the associated voltage or current variations.

Variable frequency drives are used in applications ranging from small appliances to large compressors. Systems using variable frequency drives can be more efficient than hydraulic systems. Since the 1980s, power electronics technology has reduced variable frequency drive cost and size and has also improved performance in semiconductor switching devices, line topologies, simulation and control techniques, and control hardware and software. Variable frequency drives include low-space and medium-voltage AC-AC and DC-AC topologies.

A variable frequency drive is a device used in a drive system consisting of three main sub- systems: an AC motor, a main drive controller assembly, and a drive/operator interface. The AC electric motor used in a variable frequency drive is usually three-phase induction motor. The variable frequency drive controller is a solid-state power electronics conversion system having three distinct sub- systems: a rectifier bridge converter, a direct current (DC) link, and an inverter. Most drives are AC-AC drives and convert AC line input to AC inverter output. However, in some applications, such as common DC bus or solar applications, drives are configured as DC-AC drives. The operator interface provides a means for an operator to start and stop the motor and adjust the operating speed. The variable frequency drive can also be controlled by a programmable logic controller through an interface. Additional operator control functions might include reversing and switching between manual speed adjustment and automatic control from an external process control signal. The operator interface often includes an alphanumeric display or indication lights and meters to provide information about the operation of the drive.

In starting a motor, a variable frequency drive initially applies a low frequency and voltage. This avoids high inrush current associated with direct-on-line starting. After the start of the variable frequency drive, the applied frequency and voltage are increased to the controlled rate or ramped up to accelerate the load. The starting method typically allows the motor to develop 150% of its rated torque while the variable frequency drive is drawing less than 50% of its rated current from the mains in the low-speed range. A variable frequency drive can be adjusted to produce a steady 150% starting torque from standstill right up to full speed. In a variable frequency drive, the stopping sequence is just the opposite as the starting sequence. The frequency and voltage applied to the motor are ramped down at a controlled rate. When the frequency approaches zero, the motor is shut off. A small amount of braking torque is available to help decelerate the load a little faster than it would stop if the motor were simply switched off and allowed to coast. Additional braking torque can be obtained by adding a braking circuit (i.e. a resistor controlled by a transistor) to dissipate the braking energy. With a four-quadrant rectifier (active front-end), the variable frequency drive is able to brake the load by applying a reverse torque injecting the energy back to the AC line.

Many fixed-speed motor load applications that are supplied direct from AC line power can save energy when they are operated at variable speed by means of a variable frequency drive. Such energy cost savings are especially pronounced in variable-torque centrifugal fan and pump application, where the load's torque and power vary with the square and cube, respectively, of the speed. This change gives a large power reduction compared to fixed-speed operation for a relatively small reduction in speed.

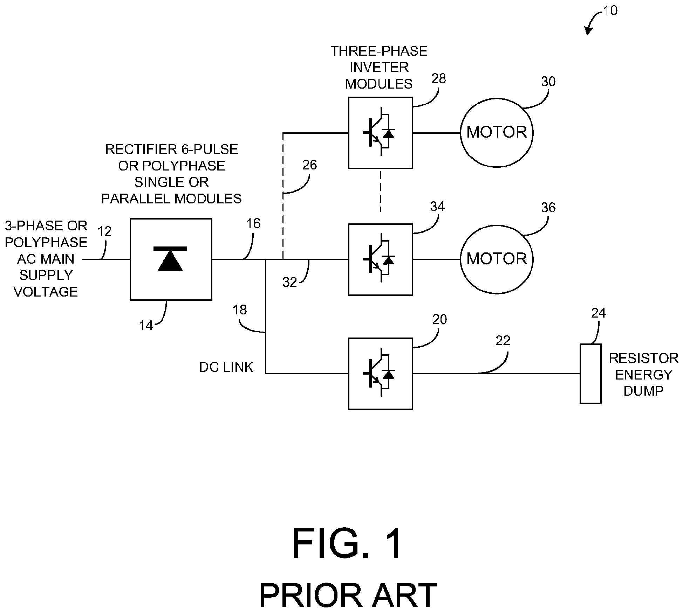

FIGURE 1 illustrates the topology of the AC variable frequency drive of the prior art. This AC variable frequency drive 10 is connected to a three-phase or polyphase AC main supply voltage 12. This voltage passes through a rectifier 14 so as to convert the AC voltage into DC voltage. The rectifier 14 can be a six pulse or polyphase rectifier in single or parallel modules. The rectifier 14 is connected by line 16 to a DC link 18. The DC link 18 is connected to a three-phase inverter module 20. The inverter module 20 converts the DC voltage from line 18 into an AC power supply 22 that is delivered to a resistor energy dump 24. Another DC link 26 will extend to another in three-phase inverter module 28 which, in turn, is connected to the variable frequency drive motor 30. Another DC link 32 can pass the DC voltage from the rectifier 14 to another inverter module 34 and then to motor 36.

In this FIGURE 1, it can be seen that the mains power supply 12 is converted from a polyphase AC voltage to a DC voltage using a simple uncontrolled diode rectifier 14. The DC link voltage is not controlled by the converter. It is a function of the main power network (i.e. voltage, waveform and total linear and non-linear impedances) combined with the total load on the DC link side of the rectifier 14.

As a typical example, on a 600 volt drilling rig system, the peak DC link voltage when no motor loads are present is 849 volts. When running at full load, this theoretical maximum will drop to 600 x 1.35 = 810 volts. It can be also significantly lower than this (780 volts is typical).

The maximum motor voltage that the inverter modules can produce is defined by the DC link voltage of the converter and the maximum pulse width modulation (PWM) modulation depth that may be used to produce the output voltage. Using the above numbers for a nominal 600 mains voltage, under heavy load, the maximum voltage is 551 Vrms even if the PWM modulation depth is taken to be 100%.

When operating at high speeds (in the region of field weakening), all electric motors (induction, permanent magnet, switched-reluctance etc.) are limited in the torque and power that can be produced by the maximum voltage that can be applied to the motor. Generally, the maximum power is proportional to the square of the maximum voltage. As such, this reduced DC link voltage limits the power available for high loads or rapid acceleration in high-speed operation.

Many modern drive systems are equipped with large-scale energy storage systems that can provide power into and out of the DC link on demand. These systems can be based on numerous physical energy storage elements. For example, these can include batteries, ultra-capacitors and mechanical flywheels.

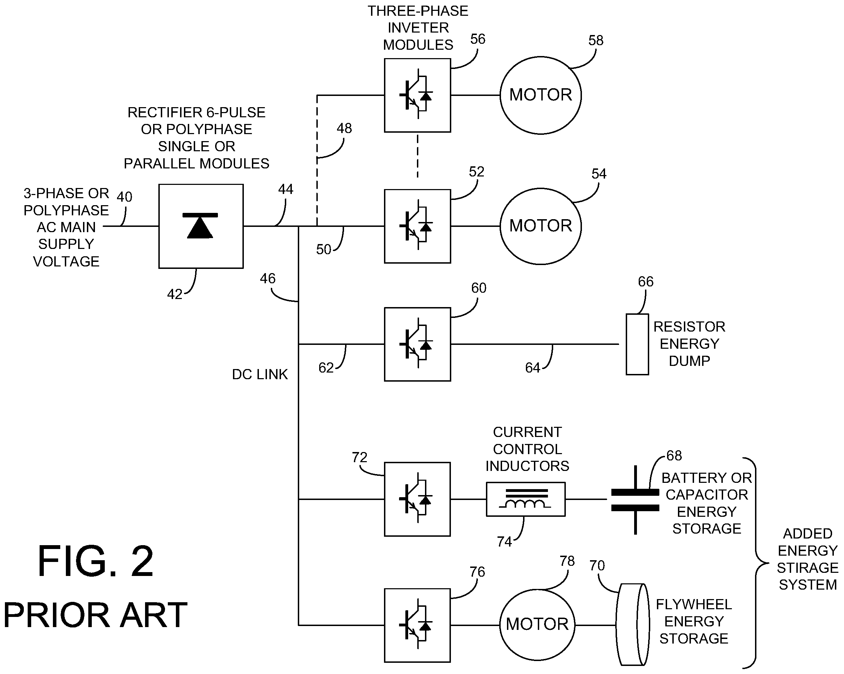

FIGURE 2 is illustrative of a modern drive system. In FIGURE 2, it can be seen that the three-phase or polyphase AC main voltage is delivered to the system along line 40. This AC main supply voltage is rectified into a DC voltage by rectifier 42. Rectifier 42 can be a six-pulse or polyphase rectifier in single or parallel modules. The DC voltage is delivered along line 44 to various DC links along line 46 and along line 48. Line 46 or line 50 can pass the DC voltage to a three-phase inverter module 52 and then pass AC power to a variable frequency motor 54. The DC voltage can also pass along DC link 48 to the inverter module 56 and then to motor 58. Similar to the manner shown in FIGURE 1, the DC link 46 can deliver the DC power to another inverter module 60 on line 62 and then on as an AC voltage along line 64 to a resistor energy dump 66.

FIGURE 2 shows an energy storage system such as a battery bank or ultra-capacitor energy storage bank 68 and/or a flywheel energy storage 70. Ultimately, the DC voltage will pass through a three-phase inverter module 72 to a current control inductor 74 and then to the battery bank or ultra-capacitor energy storage bank 68. Similarly, the DC voltage can pass through the DC link 46 to another three-phase inverter module 76 to another motor 78. Ultimately, the flywheel energy storage 70 can be used to drive the motor 78 in the absence of sufficient power provided through the inverter module 76.

The initial motivation for adding such energy storage is to allow high peaks of motoring and regenerating power to be provided by the energy storage system. This makes the load on the mains network largely constant in nature. This is often called "load leveling".

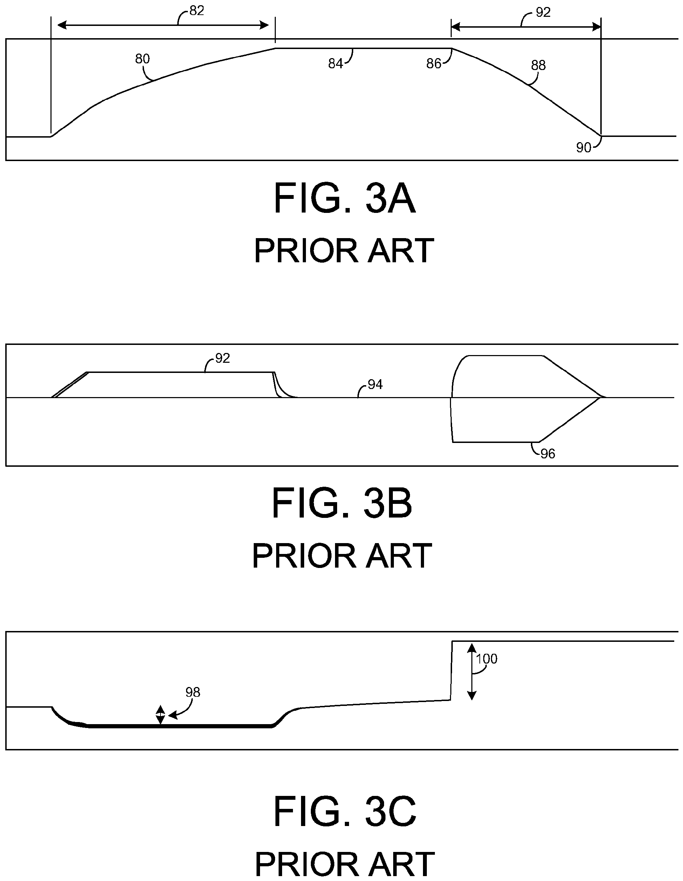

FIGURES 3A-3C graphically show various curves that illustrate the maximum acceleration and deceleration from standstill to 200% of normal speed and back to standstill with a typical 1 MW 800 r.p.m. machine coupled to a large inertia. The system would be powered by a normal drive topology (such as illustrated in FIGURES 1 and 2). As can be seen in FIGURE 3A, line 80 illustrates acceleration from start to full speed. This acceleration will take approximately five seconds as illustrated by line 82. Line portion 84 illustrates the operation of the motor at full speed for a period of time. At the end 86 of line 84, the motor starts to decelerate back to standstill. This is shown by line 88 extending from end 86 to end 90. This period of time, illustrated by line 92, will also be approximately 3.3 seconds.

FIGURE 3B illustrates the relationship of the power to the load as provided from the mains network via the rectifier. In particular, during the acceleration 80 (shown in FIGURE 3A) the power to the load is shown by line 92. This power to the load is generally constant during the period of acceleration 80. Ultimately, during normal operation 84, the power to the load will be generally constant (as illustrated by line 94). Ultimately, during deceleration 88 (shown in FIGURE 3A), the power from the load is burned in the resistive energy dump 66 along line 96.

FIGURE 3C illustrates at 98 how the drop in DC link voltage will limit motor power at the high speeds during acceleration 80. Ultimately, the voltage in the DC link will rise according to line 100 due to the energy regenerated from the load. At 1050 volts DC, the resistive dump 66 is activated and all additional power is burned in the resistor. The elevated DC link allows for greater motor power during this phase of operation. As can be seen, the acceleration takes approximately 50% longer than the deceleration due to the reduced maximum motor voltage caused by the drop in the DC link voltage 98.

In the past, various patents have issued to the present Applicant regarding load leveling and/or peak shaving. For example, U.S. Patent No. 8,446,037, issued on May 21, 2013 to K. R. Williams, describes an energy storage system for peak-shaving of drilling rig power usage. This energy storage for the drilling rig has a source of power, an AC bus connected to the source of power, a DC bus, a load connected to the DC bus, a rectifier connected to the AC bus and the DC bus for converting AC power from the source of power to DC power to the load, and an energy storage system connected to the DC bus. The energy storage system can be batteries, capacitors or combinations thereof. A diode is connected between the energy storage and the DC bus so as to supply power to the load when the DC voltage is less than a DC source voltage. The energy storage system has a nominal voltage slightly lower than a voltage of the AC-to-DC conversion by the rectifier.

U.S. Patent No. 9,059,587, issued on June 16, 2015 to the K. R. Williams, shows system and method of supplying power to loads of the drilling rig. The system for providing power to a load of the drilling rig has a natural gas engine/generator and an energy storage system. The load is switchably connected to one or both of the natural gas engine/generator and the energy storage system. The natural gas engine/generator and the energy storage system have a capacity suitable for supplying requisite power to the load. A rectifier is connected to an output line of the engine/generator so as to convert the AC power to DC power. The rectifier is a phase-controlled silicon-controlled rectifier so as to be responsive to a power requirement of the load. The energy storage system is a battery.

U.S. Patent No. 9,197,071, issued on November 24, 2015 to K. R. Williams, describes an energy storage system for supplying power to a load of a drilling rig. This system for supplying power to a drilling rig has an engine/generator with the output line so as to transfer power therefrom, an energy storage system connected to the engine/generator, and a load connected to the energy storage system such that the power from the energy storage system is directly transferred to the load and such that power from the engine/generator is electrically isolated from the load. The engine/generator has a capacity greater than a maximum power requirement of the load. The energy storage system can include at least one battery.

U.S. Patent No. 9,065,300, issued on June 23, 2015 to K. R. Williams, describes a dual fuel system and method of supplying power to loads of a drilling rig. The system has a dual fuel engine/generator and an energy storage system. The load is switchably connected to one or both of the dual fuel engine/generator and the energy storage system. The dual fuel engine/generator and the energy storage system have a capacity suitable for supplying requisite power to the load. A rectifier is connected to an output line of the engine/generator to us to convert the AC power to DC power. The energy storage system is a battery.

U.S. Patent No. 10,288,041, issued on May 14, 2019 to K. R. Williams, teaches a renewable energy system having a distributed energy storage system and photovoltaic cogeneration. This renewable energy system has a plurality of turbines separately connected to a line so as to form a turbine string, a plurality of turbine transformers separately and respectively connected to the plurality of turbines, a plurality of energy storage systems separately and respectively connected to the plurality of turbine transformers source to store energy from the turbines, and a distribution transformer connected to the turbine strings so as to raise a voltage from the turbine strings to a grid voltage. The plurality of turbines are wind power turbine systems. The energy storage system is either a battery or a capacitor. A photovoltaic array can be connected to each turbine.

It is an object of the present invention to provide a system and method that transiently boosts the DC link to a higher voltage.

It is another object of the present invention to provide a process and system that allows short-term operation of a motor at a higher voltage.

It is still another object of the present invention to provide a process and system that increases high-speed performance of an electric motor.

These and other objects and advantages of the present invention will become apparent from a reading of the attached specification and appended claims.

### SUMMARY OF THE INVENTION

The present invention is a system that comprises an electric motor having a variable frequency drive, an AC power supply adapted to supply polyphase AC voltage, a rectifier connected to the AC power supply and adapted to convert the polyphase AC voltage into a DC voltage, a DC link connected to the rectifier so as to pass the DC voltage therefrom, an inverter module connected to the DC link so as to convert the DC voltage to an alternating current, and an energy storage system connected to the variable frequency drive of the electric motor. The electric motor is electrically connected to the inverter module such that the alternating current drives the electric motor.

The energy storage system is directly connected to the DC link. The DC link controller is connected to the DC link and adapted to limit the DC voltage from the DC link. The energy storage system is electrically connected to the DC link controller. A feedback line connects the DC link to the DC link controller. A current control inductor is electrically connected to the inverter module and to the energy storage system. This current control inductor is connected to the variable frequency drive of the electric motor so as to provide current feedback to the variable frequency drive. The energy storage system can be a battery bank, a capacitor bank, a flywheel, or a combination of these.

The present invention is also a process for transiently increasing performance of an electric motor. This process includes boosting a DC link voltage of a rectifier-fed variable frequency drive by using an energy storage system. The energy storage system delivers power directly to a DC link of the variable speed drive. Feedback is provided from the DC link to a DC link controller. The variable frequency drive of the electric motor is connected to the DC link. The DC link voltage is converted into an alternating current to the electric motor. An AC polyphase voltage is introduced into a circuit in which the DC link in the variable frequency drive is part of the circuit. The AC polyphase voltage is rectified into a DC voltage to the DC link. In this process, the energy storage system can be a battery bank, capacitor bank, a flywheel, or combinations thereof.

The present invention is also system for increasing performance of an electric motor. The system has an AC power supply adapted to supply polyphase AC voltage, a rectifier connected to the AC power supply and adapted to convert the polyphase AC voltage into a DC voltage, a DC link receiving the DC voltage from the rectifier, and an energy storage system that stores electrical energy. The DC link passes the DC voltage to a rectifier-fed variable frequency drive of the electric motor. The energy storage system is connected to the DC link so as to pass power to the DC link and to the rectifier-fed variable frequency drive of the electric motor. The energy storage system is directly connected to the DC link. An inverter module is connected to the DC link so as to convert the DC voltage to an alternating current. The alternating current passes so as to supply power to the electric motor so as to drive the electric motor.

This foregoing Section is intended to describe, with particularity, the preferred embodiments of the present invention. It is understood that modifications to these preferred embodiments can be made within the scope of the present claims. As such, this Section should not to be construed, in any way, as limiting of the broad scope of the present invention. The present invention should only be limited by the following claims and their legal equivalents.

### BRIEF DESCRIPTION OF DRAWINGS

FIGURE 1 is a block diagram showing a prior art motor topology.
FIGURE 2 is a block diagram showing another type of motor topology utilizing energy storage.
FIGURES 3A, 3B and 3C are graphical representations of the various operations and power consumptions associated with the prior art topologies of FIGURES 1 and 2.
FIGURE 4 is a block diagram showing the system of the present invention.
FIGURE 5 is a block diagram showing an alternative embodiment of the topology of the present invention of FIGURE 4.
FIGURES 6A, 6B and 6C are graphical representations of the various power consumptions and motor performances associated with the system and process of the present invention.

### DETAILED DESCRIPTION OF THE INVENTION

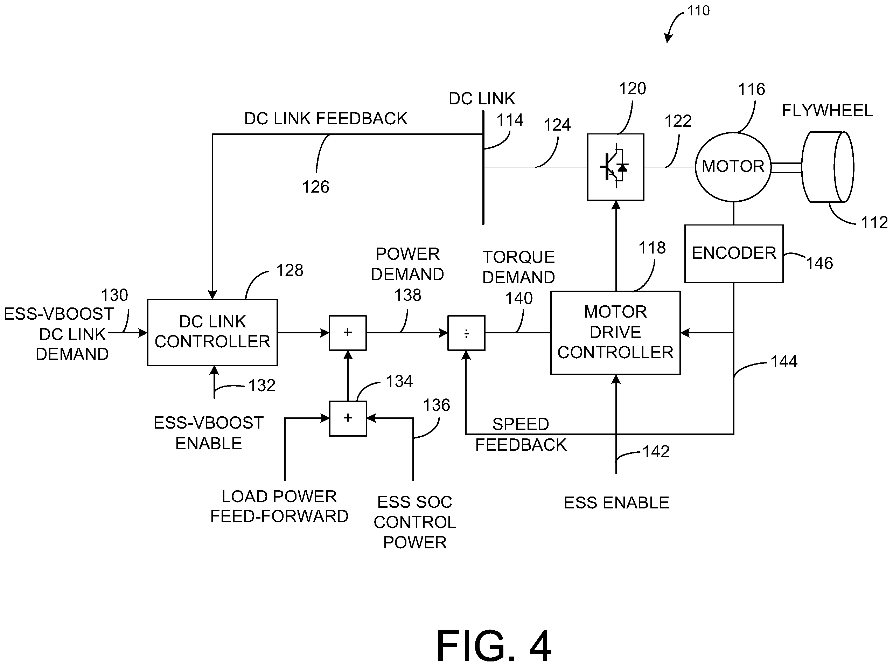

Referring to FIGURE 4, there is shown the system 100 that includes a DC-link connected energy storage system 112 to transiently boost the DC link 114 to a higher voltage to allow short-term operation of the motor 116 at higher voltage than would be possible using a rectifier-fed converter only. In particular, in FIGURE 4, the motor 116 has a variable frequency drive 118. An inverter module 120 will convert the DC voltage into an AC voltage for delivery along line 122 for operation of the motor 116. In particular, this DC voltage is received along line 124 from the DC link 114.

The DC link 114 has a DC link feedback 126 extending to the DC link controller 128. DC link controller 124 will receive inputs as to the link demand 130 from the energy storage system 112 and the voltage boost 132 from the energy storage system. Ultimately, power can be supplied from module 134. This power can be in the nature of polyphase AC power. Where polyphase AC power is introduced into the system, a suitable rectifier can be employed so as to convert the polyphase AC power to DC power. An energy storage system on chip control power line 136 passes into the circuitry. Ultimately, the variable frequency drive 110 will provide a power demand 138 and the torque demand 140 for the operation of the variable frequency motor 116. The enablement of the energy storage system is accomplished through line 142. Speed feedback from the motor is provided along line 144 back to the motor drive controller 118. This speed feedback can be suitably encoded by block 146 for use in the system of the present invention.

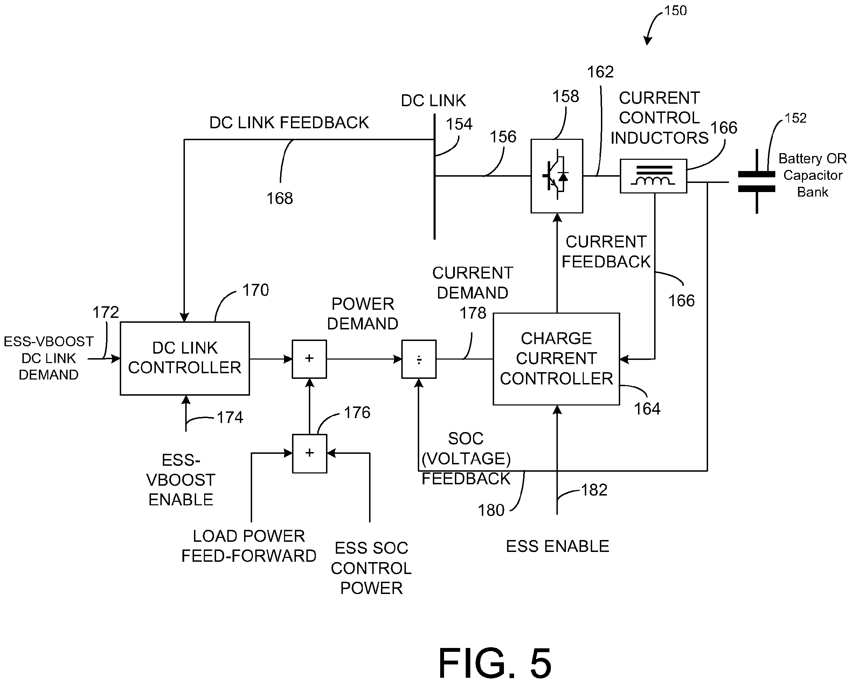

FIGURE 5 shows an alternative embodiment of the system 150. FIGURE 5 is similar to that of FIGURE 4 in showing the DC volt boost for the for transient high-speed/high-torque operation of the variable frequency-controlled motor. Ultimately, system 150 includes a battery bank or capacitor bank 152. The DC link 154 is connected by line 156 to the three-phase inverter module 158. A current control inductor 160 is positioned so as to receive power from the three-phase inverter module 158. This power will pass as AC power through line 162 to the inductor 150. Current feedback to the variable frequency drive 164 is provided along line 166. DC link feedback is provided along line 168 to the DC link controller 170. As in the previous embodiment shown in FIGURE 4, the DC link controller will receive the DC link demand from line 172 and the enablement of the boost from line 174. The input power can be provided by module 176 so as to provide the necessary power demand and the current demand to the variable frequency drive 164. Voltage feedback from the energy storage system (i.e. the battery bank or capacitor bank 152) can be provided back to line 178 through line 180. The enablement of the energy storage system and its interaction with the DC link 154 is passed through line 182 to the variable frequency drive 164.

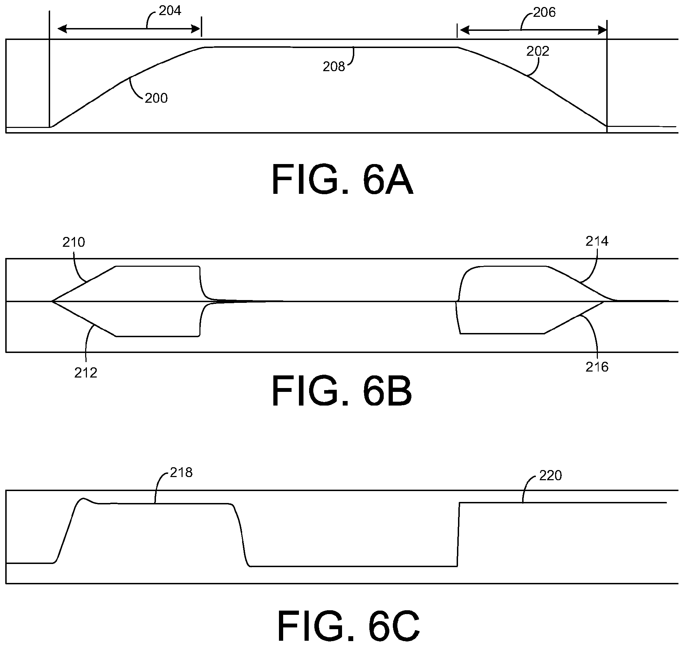

In FIGURES 6A-6C, the curves show the same motor and load with the same speed ranges where the present invention is implemented by transiently increasing the high-speed performance of the electric motor by boosting the DC link voltage of the rectifier-fed variable speed drive using the energy storage system. In particular, the power is delivered directly to the DC link of the variable frequency (variable speed) drive.

FIGURE 6A shows the acceleration 200 and the deceleration 202 of the motor. As with FIGURE 3A, the acceleration takes approximately five seconds, as shown, by line 204. The deceleration takes 3.3 seconds as shown by line 206. The constant operation of the motor is shown by line 208 between the acceleration/deceleration phases of the motor.

FIGURE 6B shows that all of the power for the operation of the motor during the acceleration period 204 is provided by the energy storage system. This is illustrated by lines 210 and 212 in the graph of FIGURE 6B. When the energy storage system is disabled from providing power, the regenerated power is dumped in the resistor energy dump. This is shown by lines 214 and 216.

FIGURE 6C shows that when the system of the present invention is enabled, the energy storage system will raise the DC link to an identical level is that of the resistive dump threshold. The resistive dump is disabled when the energy boost is active. This increase in voltage provided to the DC link is illustrated by line 218 in FIGURE 6C. Ultimately, line 220 shows that the DC link voltage rises due to the regeneration and is clamped by the resistive dump.

The illustration shown in FIGURES 6A-6C shows that the acceleration performance now matches the deceleration performance. As can be seen, the energy storage system is disabled during deceleration and the resistive energy dump is used. It is also possible, and likely desirable, to maintain the energy storage function in order to store the regenerated energy for future use. However, this is not critical to the operation of the system of the present invention.

When operating in the boost mode, no power can be fed to the DC link via the rectifier since the DC link voltage is higher than the peak of the mains voltage. This likely increases somewhat the required stored energy and peak power of the energy storage system compared to the use of the energy storage system associated only with the load-leveling processes of the prior art. A charge/discharge cycle of the energy storage system can be implemented to ensure that there is sufficient energy stored and sufficient peak power flow in order to maintain the boosted DC link, when necessary.

The following numbered clauses, describing aspects of our proposals, are part of the description:
Clause 1: A system for increasing performance of an electric motor, the system comprising: an AC power supply adapted to supply polyphase AC voltage; a rectifier connected to said AC power supply, said rectifier adapted to convert the polyphase AC voltage into a DC voltage; a DC link receiving the DC voltage from said rectifier, said DC link passing the DC voltage to a rectifier-fed variable speed drive of the electric motor; and an energy storage system that stores electric energy, said energy storage system being connected to said DC link so as to pass power to the DC link and to the rectifier-fed variable speed drive of the electric motor.
Clause 2: The system of clause 1, said energy storage system being directly connected to said DC link.
Clause 3: The system of clause 1 or clause 2, further comprising: an inverter module connected to said DC link so as to convert the DC voltage to an alternating current, wherein the alternating current passes so as to supply power to the electric motor so as to drive the electric motor.
Clause 4: The system of any one of clauses 1 to 3, further comprising: a DC link controller connected to said DC link, said DC link controller adapted to limit the DC voltage from said DC link, said energy storage system being electrically connected to said DC link controller.
Clause 5: The system of clause 4, further comprising: a feedback line connecting said DC link to said DC link controller.

The foregoing disclosure and description of the invention is illustrative and explanatory thereof. Various changes in the details of the illustrated construction and the steps of the described method can be made within the scope of the appended claims without departing from the true spirit of the invention. The present invention should only be limited by the following claims and their legal equivalents.

## Claims

1. A system comprising:
an electric motor having a variable speed drive;
an AC power supply adapted to supply polyphase AC voltage;
a rectifier connected to said AC power supply, said rectifier adapted to convert the polyphase AC voltage into a DC voltage;
a DC link connected to said rectifier so as to pass the DC voltage therefrom;
an inverter module connected to said DC link so as to convert the DC voltage to an alternating current, said electric motor being electrically connected to said inverter module such that the alternating current drives said electric motor; and
an energy storage system connected to the variable speed drive of said electric motor.

2. The system of claim 1, said energy storage system being directly connected to said DC link.

3. The system of claim 1 or claim 2, further comprising:
a DC link controller connected to said DC link, said DC link controller adapted to limit the DC voltage from said DC link, said energy storage system being electrically connected to said DC link controller.

4. The system of claim 3, further comprising:
a feedback line connecting said DC link to said DC link controller.

5. The system of any preceding claim, further comprising:
a current control inductor electrically connected to said inverter module and to said energy storage system.

6. The system of claim 5, said current control inductor being connected to the variable speed drive of said electric motor so as to provide current feedback to the variable speed drive.

7. The system of any preceding claim, wherein said energy storage system is a battery bank.

8. The system of any one of claims 1 to 6, wherein said energy storage system is a capacitor bank.

9. The system of any one of claims 1 to 6, wherein said energy storage system is a flywheel.

10. A process for transiently increasing performance of an electric motor, the process comprising:
boosting the DC link voltage of a rectifier-fed variable speed drive by using an energy storage system, wherein the energy storage system delivers power directly to a DC link of the variable speed drive.

11. The process of claim 10, further comprising:
providing a feedback from the DC link to a DC link controller.

12. The process of claim 10 or claim 11, further comprising:
connecting the variable speed drive of an electric motor to an inverter module; and
inverting the DC link voltage into an alternating current to the electric motor.

13. The process of any one of claims 1 to 12, further comprising:
introducing an AC polyphase voltage of a circuit in which the DC link and the variable speed drive is a portion of the circuit; and
rectifying the AC polyphase voltage into a DC voltage to the DC link.

14. The process of any one of claims 1 to 13, wherein the energy storage system is a battery bank or a capacitor bank.

15. The process of any one of claims 1 to 13, wherein the energy storage system is a flywheel.
